# EUROPÄISCHE PATENTSCHRIFT

(11) **EP 3 119 584 B1**
(45) Veröffentlichungstag und Bekanntmachung des Hinweises auf die Patenterteilung: **18.12.2019**
(21) Anmeldenummer: 15718820.2
(22) Anmeldetag: 13.04.2015
(51) Int. Cl.: B29C 65/06, F16B 5/01, F16B 19/02, B29C 65/64

(54) **VORRICHTUNG UND VERFAHREN ZUM SETZEN EINES SETZELEMENTS IN EINEM BAUTEIL**
DEVICE AND METHOD FOR SETTING A SETTING ELEMENT IN A COMPONENT
DISPOSITIF ET MÉTHODE DE MISE EN PLACE D'UN ÉLÉMENT À METTRE EN PLACE DANS UNE PIÈCE

(30) Priorität: 23.04.2014 DE 102014105702
(43) Veröffentlichungstag der Anmeldung: 25.01.2017
(73) Patentinhaber: Weber Schraubautomaten GmbH, 82515 Wolfratshausen (DE)
(72) Erfinder: WIETHOFF, Ralf, 82362 Weilheim (DE); HARTMANN, Jochen, 83661 Lenggries (DE)
(74) Vertreter: Manitz Finsterwald Patent- und Rechtsanwaltspartnerschaft mbB
(86) Internationale Anmeldenummer: PCT/EP2015/057992
(87) Internationale Veröffentlichungsnummer: WO 2015/162029

(56) Entgegenhaltungen:
- EP-A1- 0 780 581
- EP-A1- 0 780 581
- EP-A2- 1 577 076
- EP-A2- 1 577 076
- DE-C1- 4 317 621
- DE-C1- 4 317 621

## Beschreibung

Die Erfindung betrifft eine Vorrichtung zum Setzen eines Setzelements in einem Bauteil, wobei die Vorrichtung eine Rotationsvorschubeinheit umfasst, durch welche das Setzelement um eine Drehachse in Drehung versetzbar und gleichzeitig eine in Richtung der Drehachse wirkende Axialkraft auf das Setzelement ausübbar ist, um das Setzelement unter Erzeugung einer Reibschweißverbindung zwischen Setzelement und Bauteil in das Bauteil zu treiben.

Derartige Vorrichtungen sind grundsätzlich bekannt und werden herkömmlicherweise zum Fügen von Metallbauteilen verwendet, wobei hierbei Setzelemente aus Metall zum Einsatz kommen.

Aus der DE 43 17 621 C1 ist eine Vorrichtung zum Bearbeiten eines Bauteils bzw. zum Verbinden zweier Bauteile mittels Ultraschall bekannt. Eine Sonotrode der Vorrichtung kann über einen Linearantrieb angehoben bzw. auf die zu fügenden Bauteile abgesenkt werden. Mittels einer Positionsmesseinheit wird die Position der Sonotrode in Bezug auf das eine Bauteil gemessen.

Die EP 1 577 076 A2 offenbart eine Vorrichtung zum Setzen eines ein erstes Kunststoffmaterial aufweisenden Setzelements in einem ein zweites Kunststoffmaterial aufweisenden Bauteil, mit einer Rotationsvorschubeinheit, durch welche das Setzelement um eine Drehachse in Drehung versetzbar und gleichzeitig eine in Richtung der Drehachse wirkende Axialkraft auf das Setzelement ausübbar ist, um das Setzelement unter Erzeugung einer Reibschweißverbindung zwischen Setzelement und Bauteil in das Bauteil zu treiben, einer Wegmesseinrichtung zur Messung des Weges der Rotationsvorschubeinheit, und einer Steuereinheit zur Steuerung der Rotationsvorschubeinheit in Abhängigkeit von dem gemessenen Weg. Die EP1 577 076 A2 offenbart ein Verfahren zum Setzen eines ein erstes Kunststoffmaterial aufweisenden Setzelements in einem ein zweites Kunststoffmaterial aufweisenden Bauteil, bei dem mittels einer Rotationsvorschubeinheit das Setzelement in Drehung versetzt und mit einer Axial kraft beaufschlagt wird, um das Setzelement unter Erzeugung einer Reibschweißverbindung zwischen Setzelement und Bauteil in das Bauteil zu treiben, mittels einer Wegmesseinrichtung ein Weg der Rotationsvorschubeinheit gemessen wird, und die Rotationsvorschubeinheit mittels einer Steuereinheit in Abhängigkeit von dem gemessenen Weg gesteuert wird.

In der EP 0 780 581 A1 ist ein Kunststoffbefestigungsmittel beschrieben, welches sich unter Rotation selbst ein Loch in ein Verbundbauteil schneidet.

Der Erfindung liegt die Aufgabe zugrunde, eine Vorrichtung zu schaffen, welche sich zum Setzen von Kunststoffsetzelementen in Bauteilen eignet, die z.B. ein Kunststoffmaterial aufweisen.

Die Aufgabe wird durch eine Vorrichtung mit den Merkmalen des Anspruchs 1 und insbesondere dadurch gelöst, dass die Vorrichtung eine Differenzwegmesseinrichtung zur Messung des Differenzwegs zwischen einer Oberfläche des Bauteils und einer Oberfläche des angetriebenen Setzelements sowie eine Steuereinheit zur Steuerung der Rotationsvorschubeinheit in Abhängigkeit von dem gemessenen Differenzweg umfasst.

Der Erfindung liegt die Erkenntnis zugrunde, dass sich beim reibschweißenden Setzen eines Kunststoffsetzelements in einem Kunststoffbauteil die Oberfläche des Bauteils bedingt durch den während des Reibschweißens erfolgenden Wärmeeintrag verformt und insbesondere lokal eingedrückt werden kann. Für eine korrekte Durchführung des Setzprozesses ist es jedoch unerlässlich, zu jedem Zeitpunkt die exakte Eindringtiefe des Setzelements in das Bauteil zu kennen, insbesondere damit der Setzvorgang zum richtigen Zeitpunkt beendet werden kann. Anders als bei herkömmlichen Reibschweißvorrichtungen, die zum Fügen von Metallbauteilen vorgesehen sind, bei denen keine signifikante Oberflächenverformung auftritt, ist es beim Setzen von Kunststoffsetzelementen in Kunststoffbauteilen oder anderen Bauteilen, die sich vergleichsweise leicht verformen lassen, also nicht ausreichend, nur den absoluten Vorschub der Rotationsvorschubeinheit zu messen.

Der erfindungsgemäße Gedanke besteht deshalb darin, eine Relativmessung durchzuführen, genauer gesagt den Vorschub des Setzelements relativ zu dem Bauteil zu bestimmen. Auf diese Weise ist auch bei einer, z.B. konkaven, Verformung der Oberfläche des Bauteils die tatsächliche Eindringtiefe des Setzelements in das Bauteil stets bekannt, und der Setzvorgang kann in Abhängigkeit von dem gemessenen Differenzweg zu einem gewünschten Zeitpunkt beendet werden, zum Beispiel bevor aufgeschmolzenes Material des Bauteils und/oder des Setzelements in unerwünschterweise aus der Setzstelle an die Oberfläche des Bauteils verdrängt und sichtbar wird. Mit Hilfe der erfindungsgemäßen Reibschweißvorrichtung lässt sich folglich das Setzen von Kunststoffsetzelementen in Kunststoffbauteilen zuverlässig und reproduzierbar durchführen.

Beispielsweise lassen sich mittels eines gesetzten Setzelements zwei Bauteile fügen, wobei zur Herstellung einer stoffschlüssigen Verbindung mit dem Setzelement zumindest das untere Bauteil ein Kunststoffmaterial aufweisen sollte. Das obere Bauteil kann ebenfalls ein Kunststoffmaterial aufweisen, in welchem Fall es auch zwischen dem Setzelement und dem oberen Bauteil zu einer stoffschlüssigen Verbindung kommt. Es ist jedoch auch vorstellbar, dass das obere Bauteil aus einem Nicht-Kunststoffmaterial gebildet ist, wie beispielsweise Metall, Glas oder Holz. In diesem Fall sollte das obere Bauteil mit einem Vorloch versehen sein, durch welches das Setzelement hindurch in das untere Bauteil eindringen kann. Im gefügten Zustand wird das obere Bauteil dann durch einen an diesem anliegenden Kopf des Setzelements an dem unteren Bauteil geklemmt.

Gemäß einer alternativen Anwendung wird das Setzelement in nur ein Bauteil gesetzt. Ein solches Setzelement kann beispielsweise als Aufnahme für eine Schraube dienen, welche andernfalls in dem Material des Bauteils keinen Halt fände, beispielsweise weil das Material des Bauteils eine Wabenstruktur bildet oder ein Schaummaterial ist. Es versteht sich, dass ein zur Aufnahme einer Schraube vorgesehenes Setzelement mit einer entsprechenden Axialbohrung, eventuell sogar mit einer Gewindebohrung, versehen sein kann. Das Setzelement kann auch ein Gelenkteil bilden, welches mit einem als korrespondierendes Gelenkteil ausgebildeten Setzelement, das in einem anderen Bauteil gesetzt ist, zusammensteckbar oder anderweitig verbindbar ist.

Vorteilhafte Ausbildungen der Erfindung sind den Unteransprüchen, der Beschreibung und der Zeichnung zu entnehmen.

Gemäß einer Ausführungsform, die eine besonders exakte Ermittlung der Eindringtiefe des Setzelements in das Bauteil ermöglicht, ist die Differenzwegmesseinrichtung zu der Drehachse benachbart angeordnet. Es versteht sich, dass die Differenzwegmessung umso genauer ist, je näher sie an der Drehachse erfolgt. Für Setzelemente, deren maximale Weite etwa 1,5 cm beträgt, sollte der radiale Abstand zwischen der Drehachse und dem Ort der Differenzwegmessung beispielsweise nicht mehr als 3 cm betragen und bevorzugt im Bereich von 1 cm bis 2 cm liegen.

Gemäß einer weiteren Ausführungsform ist die Steuereinheit so eingerichtet, dass sie die Rotationsvorschubeinheit bei Erreichen eines vorgegebenen maximalen Differenzweges derart steuert, dass das Setzelement vor Beendigung des Setzvorgangs über einen vorbestimmten Zeitraum mit auf zumindest annähernd Null reduzierter Axialkraft und/oder Vorschubgeschwindigkeit gedreht wird. Dies trägt zu einer besonders zuverlässigen Reibschweißverbindung bei und verhindert gleichzeitig, dass aufgeschmolzenes Material aus der Setzstelle seitlich hervortritt.

Um die Axialkraft während eines Setzvorgangs gezielt einstellen zu können, ist vorteilhafterweise eine Kraftmesseinrichtung zur Messung der auf das Setzelement ausgeübten Axialkraft vorgesehen. Auf diese Weise kann die Rotationsvorschubeinheit mit der Axialkraft als Regelgröße durch die Steuereinheit geregelt werden. Als alternative oder zusätzliche Regelgrößen zur Regelung der Rotationsvorschubeinheit kommen außerdem das auf das Setzelement ausgeübte Drehmoment sowie die Anzahl der Umdrehungen des Setzelements pro Zeit oder die absolute Anzahl der Umdrehungen des Setzelements in Frage. Es ist ferner denkbar, den Setzvorgang in mehreren Stufen zu fahren, wobei in wenigstens zwei Stufen unterschiedliche Regelgrößen verwendet werden.

Bevorzugt weist die Rotationsvorschubeinheit einen elektromotorischen Vorschubantrieb auf. Dieser hat gegenüber in herkömmlichen Reibschweißvorrichtungen eingesetzten pneumatischen Vorschubantrieben den Vorteil, dass sich der Vorschub erheblich exakter steuern lässt, was für das Setzen von Kunststoffsetzelementen von großer Bedeutung ist.

Eine besonders einfache bauliche Ausgestaltung wird außerdem erreicht, wenn die Rotationsvorschubeinheit auch einen elektromotorischen Drehantrieb aufweist.

Gemäß einer weiteren Ausführungsform umfasst die Vorrichtung Zuführmittel zur automatischen Zuführung von Setzelementen aus einem Setzelementvorrat. Die Zuführmittel können beispielsweise eine pneumatische Zuführeinrichtung aufweisen, welche die Setzelemente vollautomatisch mittels Druckluft aus einem, insbesondere unerschöpflichen, zumindest aber leicht auffüllbaren, Setzelementreservoir in einen Zuführkopf der Vorrichtung einschießt, der die zugeführten Setzelemente für das Ineingriffbringen mit dem Setzwerkzeug hält. Anstelle von einer pneumatischen Zuführeinrichtung können die Zuführmittel auch ein Pick-&-Place-System umfassen.

Gemäß noch einer Variante von Zuführmitteln kann die Vorrichtung ein eine begrenzte Anzahl von Setzelementen enthaltendes Magazin umfassen. Das Magazin kann an der Vorrichtung fest verbaut sein, so dass es von Zeit zu Zeit mit Setzelementen neu bestückt werden muss. Alternativ kann das Magazin auch auswechselbar an der Vorrichtung montiert sein, so dass es nach Verbrauch aller Setzelemente lediglich durch ein volles Magazin ausgetauscht zu werden braucht.

Weiterer Gegenstand der Erfindung ist ein Verfahren mit den Merkmalen des Anspruchs 11, durch welches sich die voranstehend beschriebenen Vorteile entsprechend erreichen lassen.

Gemäß einer Ausführungsform des Verfahrens wird das Setzelement in ein nicht vorgelochtes Bauteil gesetzt. Alternativ kann das Bauteil vorgelocht sein. Beispielsweise kann das Bauteil mit einer ein Vorloch aufweisenden Deckschicht, z.B. aus einem Nichtkunststoffmaterial, wie z.B. Metall, Glas oder Holz, versehen sein und das Setzelement derart in das Vorloch gesetzt werden, dass es hinter der Deckschicht aufschmilzt und eine Hinterschneidung bildet. In diesem Fall ist das gesetzte Setzelement gewissermaßen also doppelt in dem Bauteil gesichert, nämlich zum einen durch die stoffschlüssige Verbindung mit dem Kunststoffmaterial des Bauteils und zum anderen durch die mechanische Verankerung, die aus der die Deckschicht hintergreifenden Hinterschneidung resultiert.

Das Kunststoffmaterial des Bauteils kann beispielsweise faserverstärkt sein und/oder eine Wabenstruktur bilden und/oder ein Schaummaterial aufweisen. Damit sich das Setzelement überhaupt in das Bauteil eintreiben lässt und nicht bereits an dessen Oberfläche zerfließt, besitzt das Kunststoffmaterial des Setzelements idealerweise einen höheren Schmelzpunkt als das Kunststoffmaterial des Bauteils.

Nachfolgend wird die Erfindung rein beispielhaft anhand möglicher Ausführungsformen unter Bezugnahme auf die beigefügte Zeichnung beschrieben. Es zeigen:
- Fig. 1A: eine Seitenansicht einer erfindungsgemäßen Reibschweißvorrichtung;
- Fig. 1B: eine erste perspektivische Ansicht der Vorrichtung von Fig. 1A;
- Fig. 1C: eine zweite perspektivische Ansicht der Vorrichtung von Fig. 1A;
- Fig. 2: eine Schnittansicht eines in einem ersten Bauteil zu setzenden und gesetzten Setzelements;
- Fig. 3: eine Schnittansicht eines in einem zweiten Bauteil zu setzenden und gesetzten Setzelements; und
- Fig. 4: eine Schnittansicht eines zum Fügen zweier Bauteile vorgesehenen Setzelements vor und nach dem Setzen.

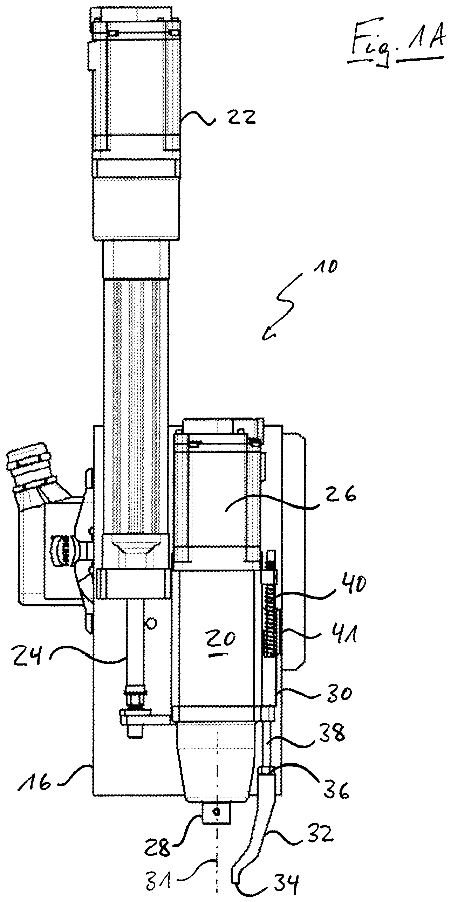

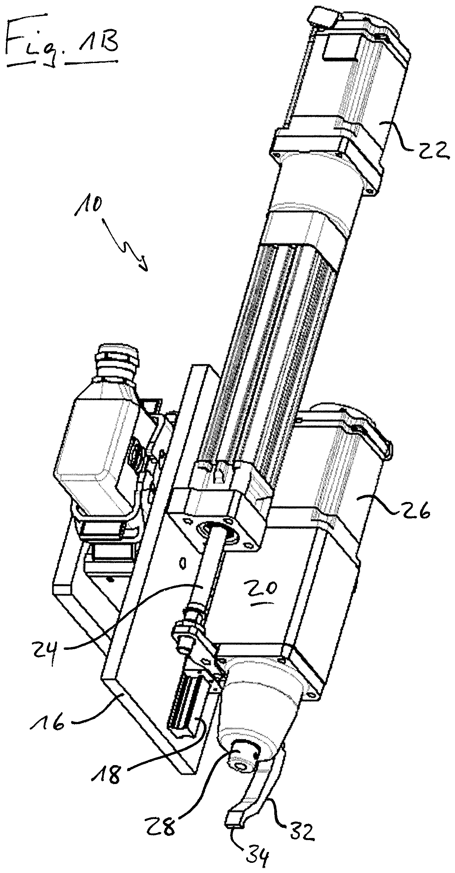

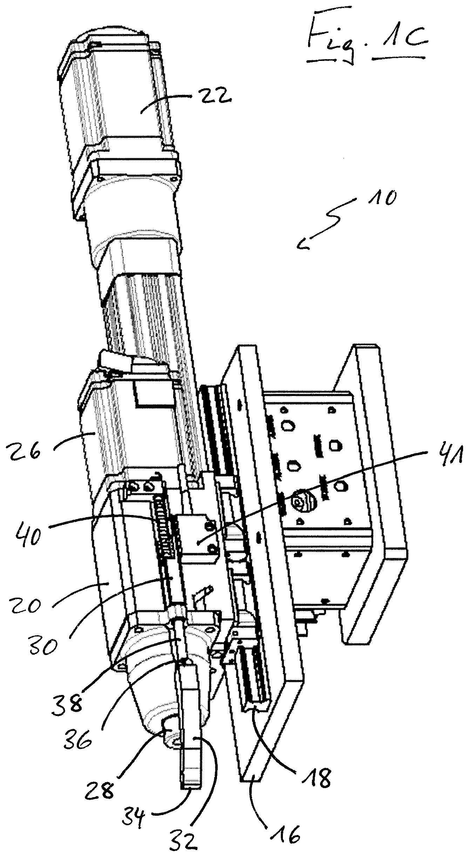

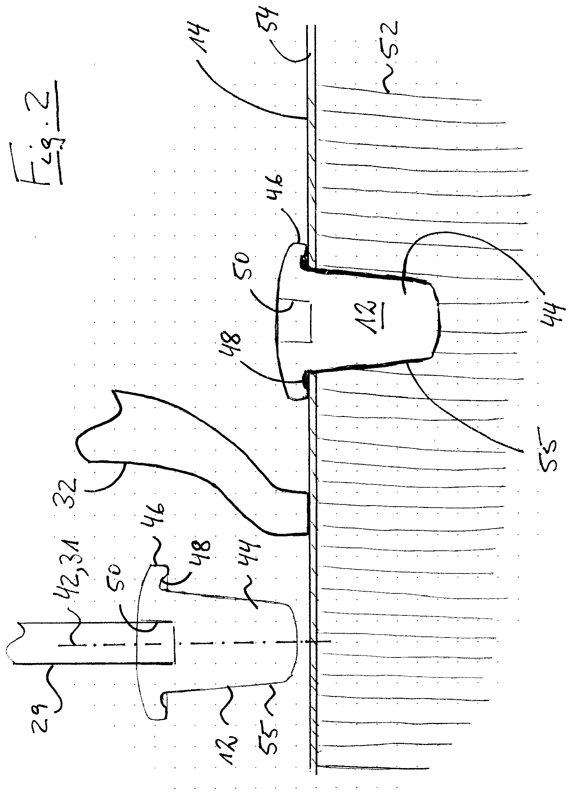

In Fig. 1 ist eine Reibschweißvorrichtung 10 dargestellt, die zum Setzen eines ein erstes Kunststoffmaterial aufweisenden Setzelements 12 in einem ein zweites Kunststoffmaterial aufweisenden Bauteil 14 dient, wie anhand von Fig. 2 bis 4 näher erläutert wird.

Die Vorrichtung 10 umfasst eine im vorliegenden Ausführungsbeispiel stationär verbaute Trägerplatte 16 mit einer sich in einer axialen Richtung erstreckenden Führungsschiene 18, an welcher eine Rotationsvorschubeinheit 20 in der axialen Richtung verschiebbar gelagert ist. Zur Verschiebung der Rotationsvorschubeinheit 20 entlang der Führungsschiene 18 ist ein elektromotorischer Vorschubantrieb 22 vorgesehen, welcher neben der Rotationsvorschubeinheit 20 an der Trägerplatte 16 montiert ist und die Rotationsvorschubeinheit 20 über eine Vorschubspindel 24 antreibt. Mit Hilfe einer in der Rotationsvorschubeinheit 20 integrierten, nicht gezeigten Kraftmesseinrichtung wird die Axialkraft gemessen, mit welcher der Vorschubantrieb 22 die Rotationsvorschubeinheit 20 voran bewegt. Die gemessene Axialkraft wird in einer nicht gezeigten Steuereinheit der Vorrichtung 10 ausgewertet.

Die Rotationsvorschubeinheit 20 weist ferner einen elektromotorischen Drehantrieb 26 auf, mittels welchem eine Werkzeugaufnahme 28 und dadurch ein darin aufgenommenes Werkzeug 29 (Fig. 2 bis 4) für das Setzelement 12 um eine sich in der axialen Richtung erstreckende Drehachse 31 drehend antreibbar ist. Aus der Stromaufnahme des Drehantriebs 26 lässt sich das während eines Setzvorgangs anstehende Drehmoment ableiten. Dieses kann ebenfalls in der Steuereinheit ausgewertet werden.

An der Rotationsvorschubeinheit 20 ist ferner eine Differenzwegmesseinrichtung 30 seitlich angebracht, die einen Tastbügel 32 umfasst, welcher in einer in Fig. 1 dargestellten Ruhelage in axialer Richtung gesehen über die Werkzeugaufnahme 28 hervorsteht. Der Tastbügel 32 ist in Richtung der Drehachse 31 gekrümmt, so dass ein vorderes Ende 34 des Tastbügels einen Abstand von etwa 2 cm zu der Drehachse 31 aufweist. Ein hinteres Ende 36 des Tastbügels 32 ist mit einer in der axialen Richtung verschiebbar an der Rotationsvorschubeinheit 20 gelagerten Führungsstange 38 verbunden. Die Führungsstange 38 ist in einem dem Tastbügel 32 abgewandten Abschnitt mit einer Rückstellfeder gekoppelt, hier in Form einer die Führungsstange 38 umgebenden Schraubenfeder 40, entgegen deren Rückstellkraft der sich an dem Bauteil 14 abstützende Tastbügel 32 beim Setzen des Setzelements 12 in das Bauteil 14 einfedern kann.

An der Führungsstange 38 ist eine nicht näher dargestellte kontaktlos auslesbare Skala vorgesehen, z.B. in Form eines markierten Magnetstreifens, welche sich beim Einfedern des Tastbügels 32 an einem relativ zu der Führungsstange 38 stationär verbauten und zum Ablesen der Skala geeigneten Wegsensor 41 vorbei bewegt, um den Federweg und somit den Differenzweg zwischen der Rotationsvorschubeinheit 20 und dem Tastbügel 32, d.h. also letztlich die Eindringtiefe des Setzelements 12 in das Bauteil 14 anzuzeigen.

Für einen Setzvorgang wird das in der Werkzeugaufnahme 28 aufgenommene Werkzeug 29 mit einem Setzelement 12 bestückt. Das kann grundsätzlich manuell geschehen. Bevorzugt ist hierfür aber eine, z.B. pneumatische, Zuführeinrichtung vorgesehen (nicht gezeigt), welche das Setzelement 12 vollautomatisch in einen ebenfalls nicht dargestellten Zuführkopf der Vorrichtung 10 einschießt, in welchem das Setzelement 12 mit dem Werkzeug 29 in Eingriff gebracht wird. Anstelle von einer pneumatischen Zuführeinrichtung ist auch ein Pick-&-Place-System oder eine Magazinlösung für die Zuführung von Setzelementen 12 vorstellbar.

Wie Fig. 2 zeigt, besitzt das Setzelement 12 eine um eine Längsmittelachse 42 rotationssymmetrische Gestalt. Es umfasst einen konischen Grundkörper 44, an dessen Kopfende ein Kragen 46 radial absteht, in dessen Unterseite eine umlaufende Vertiefung 48 eingelassen ist. An der Oberseite des Setzelements 12 ist ein Angriffsmerkmal 50 für das Werkzeug 29 vorgesehen, beispielsweise ein Sechskantloch.

Das Setzelement 12 ist, z.B. mittels eines Spritzgussverfahrens, einstückig aus einem Kunststoffmaterial gefertigt, welches einen höheren Schmelzpunkt aufweist als das Kunststoffmaterial des Bauteils 14, in welches das Setzelement 12 gesetzt werden soll. Das in Fig. 2 dargestellte Bauteil 14 umfasst eine Wabenstruktur 52 aus Kunststoff oder papierähnlichem Material, die mit einer Deckschicht 54 aus Kunststoff, z.B. aus faserverstärktem Kunststoff, versehen ist.

Zum Setzen des Setzelements 12 in das Bauteil 14 wird das mit dem Werkzeug 29 in Eingriff stehende Setzelement 12 durch den Vorschubantrieb 22 vorgeschoben, bis es an dem Bauteil 14 ansteht. Der sich ebenfalls an dem Bauteil 14 abstützende Tastbügel 32 ist in dieser Situation bereits um einen gewissen Weg eingefedert und definiert in dieser Lage einen Nullpunkt für die Differenzwegmessung.

Das Setzelement 12 wird durch den Drehantrieb 26 der Rotationsvorschubeinheit 20 in Drehung versetzt und auf eine für den Reibschweißprozess erforderliche Drehzahl gebracht. Sobald diese erreicht ist, wird das Setzelement 12 unter Aufbringung einer gewünschten Axialkraft durch den Vorschubantrieb 22 in das Bauteil 14 getrieben, wobei die Mantelfläche 55 des Grundkörpers 44 des Setzelements 12 und das angrenzende Material des Bauteils 14 aufschmelzen und eine stoffschlüssige Verbindung eingehen.

Während des Vorschubs der Rotationsvorschubeinheit 20 wird mittels der Differenzwegmesseinrichtung 30 die Eindringtiefe des Setzelements 12 in das Bauteil 14 gemessen. Sobald das Setzelement 12 so tief in das Bauteil 14 eingedrungen ist, dass die Unterseite des Kragens 46 mit der Oberfläche des Bauteils 14 in Kontakt gerät, wird durch Stoppen des Vorschubantriebs 22 die auf das Setzelement 12 aufgebrachte Axialkraft und/oder Vorschubgeschwindigkeit auf Null reduziert, wohingegen die Rotation des Setzelements 12 noch für einen gewissen Zeitraum beibehalten werden kann, so dass sich die Vertiefung 48 an der Unterseite des Kragens 46 des Setzelements 12 mit aufgeschmolzenem Kunststoffmaterial füllen kann, aber kein aufgeschmolzenes Kunststoffmaterial über den Kragen 46 hinaus nach außen hervordringt. Zur Beendigung des Setzvorgangs wird der Drehantrieb 26 gestoppt und das Werkzeug 29 durch Zurückfahren der Rotationsvorschubeinheit 20 von dem Setzelement 12 gelöst, und das aufgeschmolzene Material kann erkalten. Gegebenenfalls muss nach dem Stoppen des Drehantriebs 26 noch eine Wartezeit abgearbeitet werden.

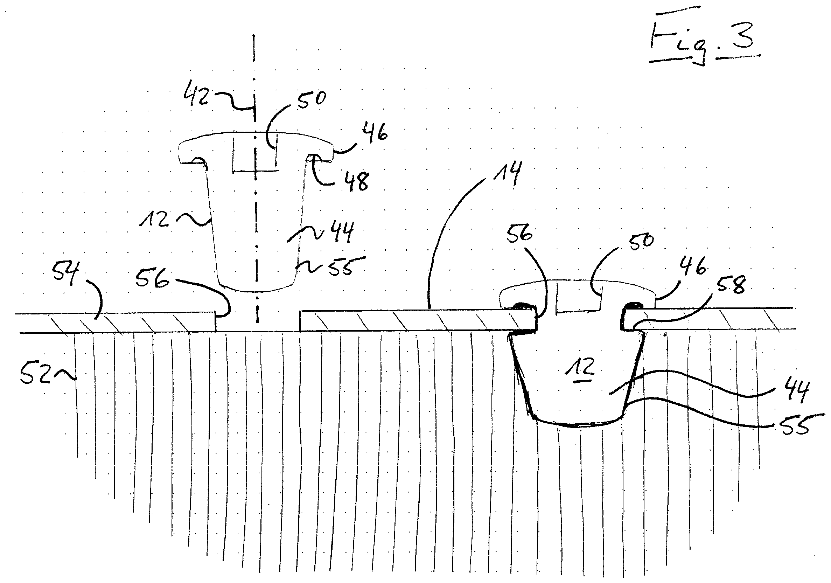

In Fig. 3 ist eine alternative Anwendung gezeigt, bei welcher ein Setzelement 12 der voranstehend beschriebenen Art in ein Bauteil 14 gesetzt wird, welches eine Wabenstruktur 52 aus Kunststoff oder papierähnlichem Material und darauf eine Deckschicht 54 aus einem Metallmaterial umfasst. Damit das Setzelement 12 die Deckschicht 54 durchdringen kann, ist diese mit einem runden Vorloch 56 versehen. Alternativ kann das Vorloch 56 auch unrund, z.B. eckig, ausgebildet sein, wodurch das gesetzte Setzelement 12 später eine höheres Drehelement aufnehmen kann, z.B. wenn eine Schraube in das Setzelement 12 eingeschraubt wird.

Für den Setzvorgang wird das Setzelement 12 mit dem Vorloch 56 ausgerichtet und wie anhand von Fig. 2 beschrieben in die Wabenstruktur 52 des Bauteils 14 getrieben. Unter geeigneter Steuerung der auf das Setzelement 12 ausgeübten Axialkraft und Drehzahl des Setzelements 12 lässt sich der Setzvorgang so fahren, dass sich das Setzelement 12 unterhalb der Deckschicht 54 verbreitert und auf diese Weise eine Hinterschneidung 58 bildet, welche zusätzlich zu der stoffschlüssigen Verbindung des Setzelements 12 mit der Wabenstruktur 52 für eine formschlüssige Verbindung des Setzelements 12 mit der Deckschicht 54 sorgt.

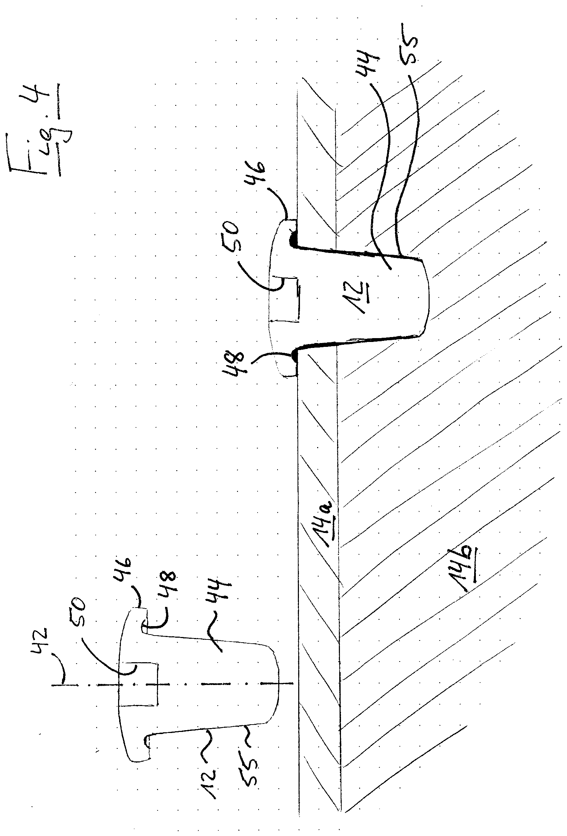

In Fig. 4 ist ein Anwendungsbeispiel dargestellt, bei welchem ein Setzelement 12 der voranstehend beschriebenen Art zum Fügen zweier Bauteile 14a, 14b verwendet wird. Jedes Bauteil 14a, 14b weist ein Kunststoffmaterial auf, dessen Schmelzpunkt niedriger ist als der des Setzelements 12. Für den Fügevorgang werden die Bauteile 14a, 14b übereinander gelegt, und das Setzelement 12 wird in der bereits beschriebenen Art und Weise durch das obere Bauteil 14a hindurch in das untere Bauteil 14b getrieben, so dass es zumindest mit dem unteren Bauteil 14b eine stoffschlüssige Verbindung eingeht. Das obere Bauteil 14a kann mit einem Vorloch versehen sein, um nur eine Klemmwirkung zum unteren Bauteil 14b zu erreichen.

Auch hier wird die Eindringtiefe des Setzelements 12 durch die Differenzwegmesseinrichtung 30 exakt überwacht und die auf das Setzelement 12 ausgeübte Axialkraft bei Erreichen der gewünschten Eindringtiefe, nämlich wenn die Unterseite des Kragens 46 des Setzelements 12 mit der Oberfläche des oberen Bauteils 14a in Kontakt gerät, durch Stoppen des Vorschubantriebs 22 auf Null reduziert, während das Setzelement 12 noch für einen gewissen Zeitraum weitergedreht wird.

Abschließend sei bemerkt, dass die Vorrichtung 10 anders als in Fig. 1 dargestellt nicht notwendigerweise stationär montiert sein muss. Es ist durchaus denkbar, die Vorrichtung 10 auch beweglich zu montieren, beispielsweise in einem mehrachsigen Bearbeitungszentrum oder an einem Roboterarm. Hierbei ist von Vorteil, dass für das Setzen von Kunststoffsetzelementen 12 in Kunststoffbauteilen 14 deutlich geringere Axialkräfte ausreichen, als beim Reibschweißen von Metallbauteilen, so dass die mit der Vorrichtung 10 durchgeführten Setzvorgänge bei genügender Steifigkeit des Bauteils 14 grundsätzlich ohne Gegenlagerung des Bauteils 14 ausgeführt werden können.

### Bezugszeichenliste

- 10: Vorrichtung
- 12: Setzelement
- 14: Bauteil
- 16: Trägerplatte
- 18: Führungsschiene
- 20: Rotationsvorschubeinheit
- 22: Vorschubantrieb
- 24: Vorschubspindel
- 26: Drehantrieb
- 28: Werkzeugaufnahme
- 29: Werkzeug
- 30: Differenzwegmesseinrichtung
- 31: Drehachse
- 32: Tastbügel
- 34: vorderes Ende
- 36: hinteres Ende
- 38: Führungsstange
- 40: Schraubendruckfeder
- 41: Wegsensor
- 42: Längsmittelachse
- 44: Grundkörper
- 46: Kragen
- 48: Vertiefung
- 50: Angriffsmerkmal
- 52: Wabenstruktur
- 54: Deckschicht
- 55: Mantelfläche
- 56: Vorloch
- 58: Hinterschneidung

## Patentansprüche

1. Vorrichtung (10) zum Setzen eines ein erstes Kunststoffmaterial aufweisenden Setzelements (12) in einem ein zweites Kunststoffmaterial aufweisenden Bauteil (14), mit
einer Rotationsvorschubeinheit (20), durch welche das Setzelement (12) um eine Drehachse (31) in Drehung versetzbar und gleichzeitig eine in Richtung der Drehachse (31) wirkende Axialkraft auf das Setzelement (12) ausübbar ist, um das Setzelement (12) unter Erzeugung einer Reibschweißverbindung zwischen Setzelement (12) und Bauteil (14) in das Bauteil (14) zu treiben,
einer Differenzwegmesseinrichtung (30) zur Messung des Differenzweges zwischen einer Oberfläche des Bauteils (14) und einer Oberfläche des angetriebenen Setzelements (12), und
einer Steuereinheit zur Steuerung der Rotationsvorschubeinheit (20) in Abhängigkeit von dem gemessenen Differenzweg.

2. Vorrichtung (10) nach Anspruch 1,
**dadurch gekennzeichnet, dass**
die Differenzwegmesseinrichtung (30) zu der Drehachse (31) benachbart angeordnet ist.

3. Vorrichtung (10) nach Anspruch 1 oder 2,
**dadurch gekennzeichnet, dass**
die Steuereinheit so eingerichtet ist, dass sie die Rotationsvorschubeinheit (20) bei Erreichen eines vorgegebenen maximalen Differenzweges derart steuert, dass das Setzelement (12) vor Beendigung des Setzvorgangs über einen vorbestimmten Zeitraum mit auf zumindest annähernd Null reduzierter Axialkraft und/oder Vorschubgeschwindigkeit gedreht wird.

4. Vorrichtung (10) nach einem der vorherigen Ansprüche,
**gekennzeichnet durch**
eine Kraftmesseinrichtung zur Messung der auf das Setzelement (12) ausgeübten Axialkraft.

5. Vorrichtung (10) nach Anspruch 4,
**dadurch gekennzeichnet, dass**
die Rotationsvorschubeinheit (20) durch die Steuereinheit regelbar ist mit einer auf das Setzelement (12) ausgeübten Axialkraft, einem auf das Setzelement (12) ausgeübten Drehmoment, einer Anzahl von Umdrehungen des Setzelements (12) pro Zeit und/oder einer absoluten Anzahl von Umdrehungen des Setzelements (12) als Regelgröße.

6. Vorrichtung (10) nach einem der vorherigen Ansprüche,
**dadurch gekennzeichnet, dass**
die Steuereinheit so eingerichtet ist, dass sie einen Setzvorgang in mehrere Stufen unterteilt und die Rotationsvorschubeinheit (20) in wenigstens zwei Stufen mit unterschiedlichen Regelgrößen regelt.

7. Vorrichtung (10) nach einem der vorherigen Ansprüche,
**dadurch gekennzeichnet, dass**
die Rotationsvorschubeinheit (20) einen elektromotorischen Vorschubantrieb (22) aufweist.

8. Vorrichtung (10) nach einem der vorherigen Ansprüche,
**dadurch gekennzeichnet, dass**
die Rotationsvorschubeinheit (20) einen elektromotorischen Drehantrieb (26) aufweist.

9. Vorrichtung (10) nach einem der vorherigen Ansprüche,
**gekennzeichnet durch**
Zuführmittel zur automatischen Zuführung von Setzelementen (12) aus einem Setzelementvorrat.

10. Vorrichtung (10) nach Anspruch 9,
**dadurch gekennzeichnet, dass**
die Zuführmittel eine pneumatische Zuführeinrichtung oder ein Pick-&-Place-System oder ein eine Anzahl von Setzelementen (12) enthaltendes, insbesondere wechselbares, Magazin umfassen.

11. Verfahren zum Setzen eines ein erstes Kunststoffmaterial aufweisenden Setzelements (12) in einem ein zweites Kunststoffmaterial aufweisenden Bauteil (14), bei dem
mittels einer Rotationsvorschubeinheit (20) das Setzelement (12) in Drehung versetzt und mit einer Axialkraft beaufschlagt wird, um das Setzelement (12) unter Erzeugung einer Reibschweißverbindung zwischen Setzelement (12) und Bauteil (14) in das Bauteil (14) zu treiben,
mittels einer Differenzwegmesseinrichtung (30) ein Differenzweg zwischen einer Oberfläche des Bauteils (14) und einer Oberfläche des angetriebenen Setzelements (12) gemessen wird, und
die Rotationsvorschubeinheit (20) mittels einer Steuereinheit in Abhängigkeit von dem gemessenen Differenzweg gesteuert wird.

12. Verfahren nach Anspruch 11,
**dadurch gekennzeichnet, dass**
die Axialkraft und/oder eine Vorschubgeschwindigkeit bei Erreichen eines vorgegebenen maximalen Differenzweges auf zumindest annähernd Null reduziert wird bzw. werden, während die Drehung des Setzelements (12) für einen vorbestimmten Zeitraum beibehalten wird.

13. Verfahren nach Anspruch 11 oder 12,
**dadurch gekennzeichnet, dass**
das Bauteil (14) mit einer ein Vorloch (56) aufweisenden Deckschicht (54) versehen ist und das Setzelement (12) derart in das Vorloch (56) gesetzt wird, dass es hinter der Deckschicht (54) aufschmilzt und eine Hinterschneidung (58) bildet.

14. Verfahren nach Anspruch 13,
**dadurch gekennzeichnet, dass**
die Deckschicht (54) aus einem Kunststoffmaterial oder aus einem Nichtkunststoffmaterial, wie z.B. Holz, Glas oder Metall, gebildet ist.

15. Verfahren nach einem der Ansprüche 11 bis 14,
**dadurch gekennzeichnet, dass**
das Kunststoffmaterial des Bauteils (14) faserverstärkt ist und/oder eine Wabenstruktur (52) bildet und/oder ein Schaummaterial aufweist; und/oder
das Kunststoffmaterial des Setzelements (12) einen höheren Schmelzpunkt besitzt als das Kunststoffmaterial des Bauteils (14).

## Claims

1. An apparatus (10) for setting a setting element (12) comprising a first plastic material in a component (14) comprising a second plastic material, comprising
a rotary feed unit (20) by which the setting element (12) can be set into rotation about an axis of rotation (31) and simultaneously an axial force acting in the direction of the axis of rotation (31) can be exerted onto the setting element (12) to drive the setting element (12) into the component (14) while producing a friction welding connection between the setting element (12) and the component (14);
a differential distance measuring device (30) for measuring the differential distance between a surface of the component (14) and a surface of the driven setting element (12); and
a control unit for controlling the rotary feed unit (20) in dependence on the measured differential distance.

2. An apparatus (10) in accordance with claim 1,
**characterized in that**
the differential distance measuring device (30) is arranged adjacent to the axis of rotation (31).

3. An apparatus (10) in accordance with claim 1 or claim 2,
**characterized in that**
the control unit is adapted so that it controls the rotary feed unit (20) on reaching a predefined maximum differential distance such that the setting element (12) is rotated before the end of the setting procedure over a predetermined period of time with an axial force and/or feed speed reduced to at least approximately zero.

4. An apparatus (10) in accordance with any one of the preceding claims,
**characterized by**
a force measuring device for measuring the axial force exerted onto the setting element (12).

5. An apparatus (10) in accordance with claim 4,
**characterized in that**
the rotary feed unit (20) can be regulated by the control unit with an axial force exerted onto the setting element (12), a torque exerted on the setting element (12), a number of revolutions of the setting element (12) per time and/or an absolute number of revolutions of the setting element (12) as the control variable.

6. An apparatus (10) in accordance with any one of the preceding claims,
**characterized in that**
the control unit is adapted so that it divides a setting procedure into a plurality of stages and regulates the rotary feed unit (20) with different control variables in at least two stages.

7. An apparatus (10) in accordance with any one of the preceding claims,
**characterized in that**
the rotary feed unit (20) has an electric motor feed drive (22).

8. An apparatus (10) in accordance with any one of the preceding claims,
**characterized in that**
the rotary feed unit (20) has an electric motor rotary drive (26).

9. An apparatus (10) in accordance with any one of the preceding claims,
**characterized by**
supply means for the automatic supply of setting elements (12) from a setting element store.

10. An apparatus (10) in accordance with claim 9,
**characterized in that**
the supply means comprise a pneumatic supply device or a pick & place system or a magazine, in particular an exchangeable magazine, containing a number of setting elements (12).

11. A method of setting a setting element (12) comprising a first plastic material in a component (14) comprising a second plastic material, in which
the setting element (12) is set into rotation by means of a rotary feed unit (20) and is acted on by an axial force to drive the setting element (12) into the component (14) while producing a friction welding connection between the setting element (12) and the component (14);
a differential distance between a surface of the component (14) and a surface of the driven setting element (12) is measured by means of a differential distance measuring device (30); and
the rotary feed unit (20) is controlled by means of a control unit in dependence on the measured differential distance.

12. A method in accordance with claim 11,
**characterized in that**
the axial force and/or a feed speed is/are reduced to at least approximately zero on reaching a predefined maximum differential distance, while the rotation of the setting element (12) is maintained for a predetermined period of time.

13. A method in accordance with claim 11 or claim 12,
**characterized in that**
the component (14) is provided with a top layer (54) having a pre-punched hole (56) and the setting element (12) is set into the pre-punched hole (56) such that it melts behind the top layer (54) and forms an undercut (58).

14. A method in accordance with claim 13,
**characterized in that**
the top layer (54) is formed from a plastic material or from a non-plastic material such as wood, glass or metal.

15. A method in accordance with any one of the claims 11 to 14,
**characterized in that**
the plastic material of the component (14) is fiber-reinforced and/or forms a honeycomb structure (52) and/or has a foam material; and/or
**in that** the plastic material of the setting element (12) has a higher melting point than the plastic material of the component (14).

## Revendications

1. Dispositif (10) pour poser un élément à poser (12) comprenant une première matière plastique dans un composant (14) comprenant une seconde matière plastique, comportant
une unité d'avance par rotation (20) au moyen de laquelle l'élément à poser (12) peut être mis en rotation autour d'un axe de rotation (31) et simultanément une force axiale agissant en direction de l'axe de rotation (31) peut être exercée sur l'élément à poser (12), afin d'enfoncer l'élément à poser (12) dans le composant (14) en réalisant une liaison par soudage par friction entre l'élément à poser (12) et le composant (14),
un moyen de mesure de course différentielle (30) pour mesurer la course différentielle entre une surface du composant (14) et une surface de l'élément à poser (12) entraîné, et
une unité de commande pour commander l'unité d'avance par rotation (20) en fonction de la course différentielle mesurée.

2. Dispositif (10) selon la revendication 1,
**caractérisé en ce que**
le moyen de mesure de course différentielle (30) est disposé au voisinage de l'axe de rotation (31).

3. Dispositif (10) selon la revendication 1 ou 2,
**caractérisé en ce que**
l'unité de commande est conçue de manière à commander l'unité d'avance par rotation (20) lorsqu'une course différentielle maximale prédéterminée est atteinte, de telle sorte qu'avant la fin de l'opération de pose, l'élément à poser (12) est tourné pendant une période de temps prédéterminée avec une force axiale et/ou une vitesse d'avance réduite(s) au moins approximativement à zéro.

4. Dispositif (10) selon l'une des revendications précédentes,
**caractérisé par**
un moyen de mesure de force pour mesurer la force axiale exercée sur l'élément à poser (12).

5. Dispositif (10) selon la revendication 4,
**caractérisé en ce que**
l'unité d'avance par rotation (20) peut être régulée par l'unité de commande avec une force axiale exercée sur l'élément à poser (12), un couple de rotation exercé sur l'élément à poser (12), un certain nombre de tours de l'élément à poser (12) par temps et/ou un nombre absolu de tours de l'élément à poser (12), à titre de grandeur de régulation.

6. Dispositif (10) selon l'une des revendications précédentes,
**caractérisé en ce que**
l'unité de commande est conçue de manière à subdiviser une opération de pose en plusieurs étapes et à réguler l'unité d'avance par rotation (20) avec différentes grandeurs de régulation dans au moins deux étapes.

7. Dispositif (10) selon l'une des revendications précédentes,
**caractérisé en ce que**
l'unité d'avance par rotation (20) comprend un entraînement d'avance (22) à moteur électrique.

8. Dispositif (10) selon l'une des revendications précédentes,
**caractérisé en ce que**
l'unité d'avance par rotation (20) comprend un entraînement de rotation (26) à moteur électrique.

9. Dispositif (10) selon l'une des revendications précédentes,
**caractérisé par**
des moyens d'alimentation pour alimenter automatiquement des éléments à poser (12) depuis une réserve d'éléments à poser.

10. Dispositif (10) selon la revendication 9,
**caractérisé en ce que**
les moyens d'alimentation comprennent un moyen d'alimentation pneumatique ou un système dit Pick & Place ou un magasin en particulier interchangeable comprenant un certain nombre d'éléments à poser (12).

11. Procédé pour poser un élément à poser (12) comprenant une première matière plastique dans un composant (14) comprenant une seconde matière plastique,
dans lequel
à l'aide d'une unité d'avance par rotation (20), l'élément à poser (12) est mis en rotation et est sollicité d'une force axiale pour enfoncer l'élément à poser (12) dans le composant (14) en réalisant une liaison par soudage par friction entre l'élément à poser (12) et le composant (14),
à l'aide d'un moyen de mesure de course différentielle (30), une course différentielle entre une surface du composant (14) et une surface de l'élément à poser (12) entraîné est mesurée, et
l'unité d'avance par rotation (20) est commandée à l'aide d'une unité de commande en fonction de la course différentielle mesurée.

12. Procédé selon la revendication 11,
**caractérisé en ce que**
la force axiale et/ou une vitesse d'avance est/sont réduite(s) au moins approximativement à zéro lorsqu'une course différentielle maximale prédéterminée est atteinte, tandis que la rotation de l'élément à poser (12) est maintenue pendant une période de temps prédéterminée.

13. Procédé selon la revendication 11 ou 12,
**caractérisé en ce que**
le composant (14) est pourvu d'une couche de couverture (54) présentant un trou préliminaire (56), et l'élément à poser (12) est posé dans le trou préliminaire (56) de manière à fondre derrière la couche de couverture (54) et à former une contre-dépouille (58).

14. Procédé selon la revendication 13,
**caractérisé en ce que**
la couche de couverture (54) est constituée en une matière plastique ou en une matière non plastique, par exemple en bois, en verre ou en métal.

15. Procédé selon l'une des revendications 11 à 14,
**caractérisé en ce que**
la matière plastique du composant (14) est renforcée de fibres et/ou constitue une structure en nid d'abeilles (52) et/ou présente une matière en mousse ; et/ou
la matière plastique de l'élément à poser (12) possède un point de fusion supérieur à celui de la matière plastique du composant (14).
